# EUROPEAN PATENT SPECIFICATION

(11) **EP 2 704 399 B1**
(45) Date of publication and mention of the grant of the patent: **28.06.2017**
(21) Application number: 13166138.1
(22) Date of filing: 01.05.2013
(51) Int. Cl.: H04L 29/06, H04L 29/08

(54) **Terminal device and data communication method thereof**
Endgerätvorrichtung und Datenkommunikationsverfahren dafür
Dispositif de terminal et son procédé de communication de données

(30) Priority: 03.09.2012 KR 20120097260
(43) Date of publication of application: 05.03.2014
(73) Proprietor: Samsung Electronics Co., Ltd, Gyeonggi-do 16677 (KR)
(72) Inventor: Choi, Jin-wook, Gyeonggi-do (KR)
(74) Representative: Taor, Simon Edward William

(56) References cited:
- WO-A1-2009/051911
- US-B1- 7 325 038

## Description

The following description relates to a terminal device and a data communication method thereof, and more particularly to a terminal device in which a virtual environment is constructed and a data communication method for performing data communication between virtual or actual terminal devices.

International patent application WO 2009/051911 discloses systems and methods for transferring data among computing environments, which include a method for transferring data items among a portion of a remote computing environment and a portion of a local computing environment using a presentation layer protocol.

In general, a terminal device in which a virtual Windows environment or a virtual Linux environment is constructed (hereinafter referred to as a virtual terminal device) uses data copy, cut, paste, and drag and drop in order to transmit data stored in a specific position to another virtual terminal device or a terminal device under an actual Windows environment or an actual Linux environment (hereinafter referred to as an actual terminal device).

For example, a virtual terminal device that transmits data may be a source terminal device, and an actual terminal device that receives the corresponding data may be a target terminal device. In order to transmit/receive data between a source terminal device and a target terminal device, it is necessary for any one of the source terminal device and the target terminal device to manually open directories of the source terminal device and the target terminal device (information on a path where data to be transmitted is located and a path where the corresponding data is stored), which is an inconvenience.

In addition, in order to transmit/receive data between virtual terminal devices, it is necessary for two virtual terminal devices to use the same communication protocol for data transmission/reception between the two virtual terminal devices. That is, if the two virtual terminal devices use different communication protocols, the data transmission/reception between the virtual terminal devices may not be performed smoothly.

The present disclosure has been made to address at least the above problems and/or disadvantages and to provide at least the advantages described below. Accordingly, an aspect of the present disclosure is to achieve smooth data transmission/reception between a virtual terminal device and a virtual or actual terminal device.

According to various aspects of the present disclosure, the data transmission/reception between the virtual terminal devices or between the virtual terminal device and the actual terminal device can be performed smoothly.

According to an aspect of the present invention, there is provided a data communication method of a first terminal device according to claim 1.

According to another aspect of the present invention, there is provided a first terminal device according to claim 6.

Optional features are set out in the dependent claims.

The above and other aspects, features and advantages of the present disclosure will be more apparent from the following detailed description when taken in conjunction with the accompanying drawings, in which:
FIG. 1 is a procedure diagram of a method for performing communication between virtual or actual terminal devices in a communication system according to an embodiment of the present disclosure;
FIG. 2 is a block diagram of a terminal device, in which a virtual environment is constructed, providing data to the other terminal device according to an embodiment of the present disclosure;
FIG. 3 is a block diagram of a terminal device, in which a virtual environment is constructed, receiving data of the other terminal device according to an embodiment of the present disclosure;
FIG. 4 is a flowchart of a method for providing data from a terminal device, in which a virtual environment is constructed, to a virtual or actual terminal device according to an embodiment of the present disclosure; and
FIG. 5 is a flowchart of a method for receiving data of a virtual or actual terminal device through a terminal device in which a virtual environment is constructed according to an embodiment of the present disclosure.

Hereinafter, embodiments of the present disclosure are described in detail with reference to the accompanying drawings.

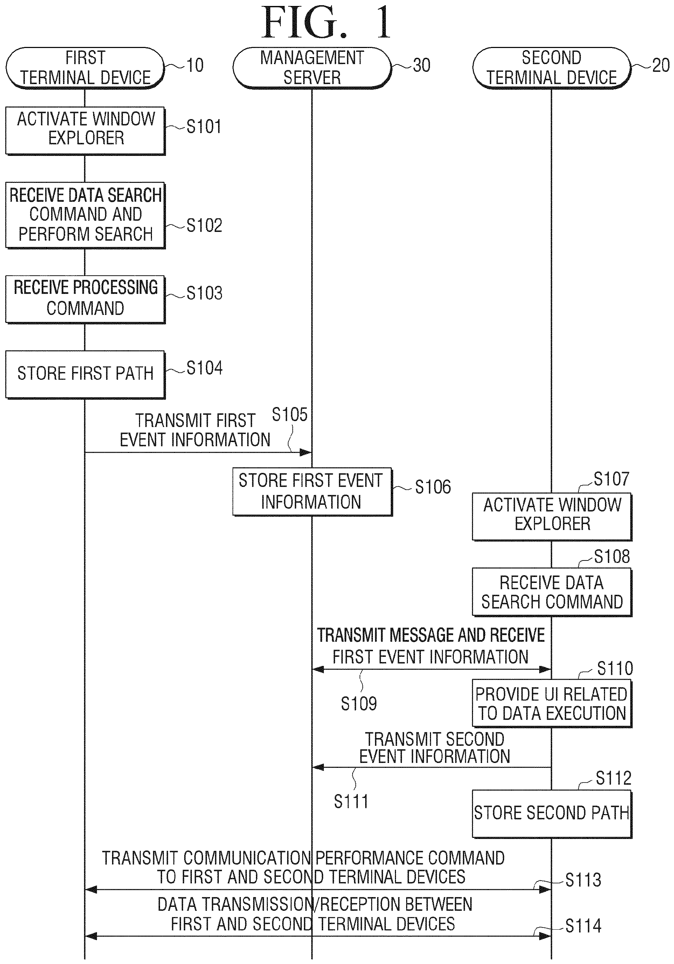

As illustrated in FIG. 1, a communication system includes a first terminal device 10 in which a virtual environment is constructed, a second terminal device 20, and a management server 30 managing event information of the first terminal device 10 and the second terminal device 20. Here, the term "virtual environment" may be an execution environment generated based on resources stored in an external server. Accordingly, different virtual Windows environments may be constructed in the first terminal device 10 and the second terminal device 20 based on the resources stored in the external server. However, the present disclosure is not limited thereto. The first terminal device 10 or the second terminal device 20 may be a terminal device in which a virtual environment is constructed, and the remaining terminal device may be a terminal device in which an actual Windows environment is constructed. In the present disclosure, explanation will be made only with respect to a case where different virtual environments are constructed in the first terminal device 10 and the second terminal device 20.

According to an embodiment of the present disclosure, the first terminal device 10 may be a source terminal device that provides data, and the second terminal device 20 may be a target terminal device that receives the data. However, the present disclosure is not limited thereto. The first terminal device 10 may be the target terminal device that receives the data, and the second terminal device 20 may be the source terminal device that provides the data to the first terminal device 10. According to the present disclosure, it is assumed that the first terminal device 10 is the source terminal device that provides the data to the second terminal device 20, and the second terminal device 20 is the target terminal device that receives the data provided from the first terminal device 10.

Of the first terminal device 10 and the second terminal device 20 in which different virtual environments are constructed, the first terminal device 10 activates the Windows explorer according to a user request (operation S101). If a data search command for at least one piece of data among a plurality of pieces of pre-stored data is received from a user when the Windows explorer is activated, the first terminal device 10 searches for the data that corresponds to the received data search command (operation S102). Thereafter, if a processing command for the searched data is received from the user, the first terminal device 10 stores first path information on the position where the searched data is stored (operation S103 and operation S104). Here, the processing command for the searched data may be one of cut, copy, and drag for the corresponding data. The first path information includes a local directory where the searched data is stored and data position information.

Accordingly, if one processing command among the cut, copy, and drag for the searched data is received, the first terminal device 10 may store the first path information that includes the local directory and the data position information for the position where the corresponding data is stored. If the processing command for copy is received, the first terminal device 10 may store the first path information that includes the local directory and data position information to perform copy of the data stored in the first terminal device 10 based on the received processing command.

In addition, if the processing command for the searched data is received, the first terminal device 10 transmits first event information related to the processing command to the management server 30 (operation S105). Here, the first event information includes information on one processing command for cut, copy, and drag of the searched data and identification information of the first terminal device 10, that is, address information. The management server 30 which has received the first event information stores the received first event information (operation S106).

As described above, when the first event information of the first terminal device 10 is stored in the management server 30, the second terminal device 20 activates the Windows explorer according to a user request (operation S107). When the Windows explorer is activated as described above, the second terminal device 20 receives a data search command for at least one piece of data among the pre-stored plurality of pieces of data from the user (operation S108). If the data search command is received, the second terminal device 20 transmits an event occurrence message that notifies of the reception of the data search command to the management server 30. If this data is received, the management server 30 transmits the first event information that is stored related to the processing command for the data searched in the first terminal device 10 to the second terminal device 20 (operation S109). However, the present disclosure is not limited thereto. If the Windows explorer is activated, the second terminal device may transmit the event occurrence message that notifies of the activation of the Windows explorer to the management server 30, and thus the management server 30 may transmit the first event information that is stored related to the data processing command of the first terminal device 10 to the second terminal device 20.

If the first event signal is received, the second terminal device 20 provides a UI for executing the data stored in the first terminal device 10 based on the first event information (operation S110). If the execution command is received from the user through the corresponding UI in the state where the UI has been provided, the second terminal device 20 transmits second event information related to the received execution command to the management server 30 (operation S111). In addition, the second terminal device 20 stores second path information for executing the data stored in the first terminal device based on the received execution command (operation S112). Here, the execution command may be one of paste and drop for storing the data stored in the first terminal device 10 in a specific position. The second event information includes one execution information of paste and drop for the corresponding data and identification information of the second terminal device 20, that is, address information. Further, second path information includes local directory information for storing the data stored in the first terminal device 10 in a specific position.

If the execution command for paste is received, the second terminal 20 generates and stores the second path information that includes the local directory information related to the specific position to perform paste for the data stored in the first terminal device 10 based on the received execution command. In addition, the second terminal device 20 generates the second event information that includes the execution information related to paste and the address information of the second terminal device 20, and transmits the second event information to the management server 30.

On the other hand, if the second event information is received from the second terminal 20, the management server 30 determines the first terminal device 10 that is the source terminal device and the second terminal device 20 that is the target terminal device based on the pre-stored first event information and the second event information received from the second terminal device 20. That is, the management server 30 generates a communication performance command for performing communication between the first terminal device 10 and the second terminal device 20 based on the first event information and the second event information and transmits the generated communication performance command to the first terminal device 10 and the second terminal device 20 (operation S113). Here, the communication performance command that is transmitted to the first terminal device 10 is a performance command for performing data transmission to the second terminal device 20, and includes the second event information of the second terminal device 20. Further, the communication performance command that is transmitted to the second terminal device 20 is a performance command for performing data reception from the second terminal device 20, and includes the first event information of the first terminal 10.

Accordingly, the first terminal device 10 and the second terminal device 20 transmit/receive the data by performing communication according to the received communication performance command (operation S114). Specifically, if the communication performance command is received, the first terminal device 10 searches for the data based on the first path information, and transmits the searched data to the second terminal device 20 based on the identification information included in the received communication performance command, that is, the address information. The second terminal device 20, which has received the data from the first terminal device 10 stores the received data based on the second path information.

As described above, the communication system according to the present disclosure can perform the data processing such as copy, cut, and paste of the data between the first and second terminal devices 10 and 20 which use different protocols.

Above, the method for performing the communication between the virtual or actual terminal devices in the communication system according to the present disclosure has been described in detail. Hereinafter, the configurations of the above-described first terminal device 10 and second terminal device 20 will be described.

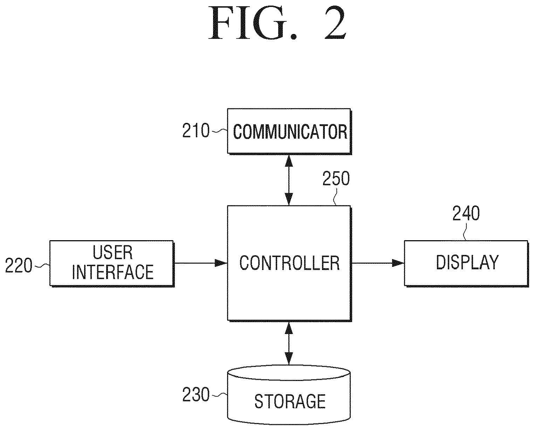

FIG. 2 is a block diagram of a terminal device, in which a virtual environment is constructed, providing data to the other terminal device according to an embodiment of the present disclosure.

As illustrated in FIG. 2, the terminal device, in which the virtual environment is constructed, may be a source terminal device that provides the data to the other terminal device, in which the virtual environment is constructed, that is, the second terminal device 20. Here, the virtual environment is an execution environment that is generated based on the resources stored in the external server. Accordingly, the virtual Windows environment can be constructed in the first terminal device 10 and the second terminal device 20 based on the resources stored in the external server. However, the present disclosure is not limited thereto. The first terminal device 10 or the second terminal device 20 may be a terminal device in which the virtual environment is constructed, and the other one thereof may be a terminal device in which the actual Windows environment is constructed.

As described above, the first terminal device 10, in which the virtual environment is constructed, includes a communicator 210, a user interface 220, a storage unit 230, a display 240, and a controller 250.

The communicator 210 performs communication with the management server 30 and the other terminal device, that is, the second terminal device 20. This communicator 210 may be implemented by a communication module, such as a near field communication module (not illustrated) and a wireless communication module (not illustrated). The communicator 210 implemented by the wireless communication module can be connected to an external network according to a wireless communication protocol and perform communication with the management server 30 and the second terminal device 20. In particular, the communicator 210 may be implemented by a wireless communication module, and perform communication with the second terminal device 20 in a P2P (Peer to Peer) method. However, the present disclosure is not limited thereto. The communicator 210 may perform communication with the second terminal device 20 through the external server according to a network topology type, or perform communication with the second terminal device 20 using a file transfer protocol, such as HTTP (Hyper Text Transfer Protocol) and FTP (File Transfer Protocol), for example, and the network position.

On the other hand, the management server 30 that performs communication through the communicator 210 is a server that performs a communication performance command for transmitting/receiving the data by performing the communication between the first terminal device 10 and the second terminal device 20. The second terminal device 20 that performs the communication through the communicator 210 is a terminal device in which the virtual environment or actual Windows environment is constructed and which transmits/receives the data with the first terminal device 10.

The user interface 220 receives the processing command for the data searched according to the data search command, and the storage unit 230 stores the first path information for the position of the searched data. The controller 250 transmits the first event information related to the processing command received through the user interface 220 to the management server 30.

Specifically, the controller 250 activates the Windows explorer according to the user command input through the user interface 220. Accordingly, the display 240 displays the activated Windows explorer, and thus an activated Windows explorer window may be displayed on a screen. As described above, the user interface 220 receives the data search command for at least one piece of data among a plurality of pieces of pre-stored data in state where the Windows explorer window is displayed. If the data search command is received, the controller 250 searches for the data that corresponds to the data search command. Thereafter, if the processing command for the searched data is received through the user interface, the storage unit 230 stores the first path information on the position where the searched data is stored according to a control command of the controller 250. Here, the processing command for the searched data may be one of cut, copy, and drag for the corresponding data. The first path information includes the local directory in which the searched data is stored and the data position information. If the processing command for copy is received, the controller 250 may control the storage unit 230 to store the first path information including the local directory and the data position information to perform copy of the searched data based on the received processing command.

If the processing command for the searched data is received through the user interface 220, the controller 250, which controls the storage unit 230 to store the first path information on the searched data, generates and transmits the first event information related to the received processing command to the management server 30. Here, the first event information includes the event information for performing one of cut, copy, and drag with respect to the searched data and the identification information of the first terminal device 10, that is, address information.

Thereafter, if the communication performance command that includes the identification information of the second terminal device 20, that is, the address information, is received from the management server 30, the controller 250 operates to transmit the data to the second terminal device 20 based on the address information included in the received communication performance command and the first path information stored in the storage unit 230. Here, the communication performance command received from the management server 30 is a command that is generated based on the second event information related to the execution command in the second terminal device 20 and the first event information. In other words, the communication performance command is a command that is generated based on the first event information related to the processing command for the searched data in the first terminal device 10 and the second event information related to the execution command for the corresponding data in the second terminal device 20.

As described above, the first event information is event information for one processing command of cut, copy, and drag for the searched data, and the second event information is event information for one execution command of paste and drop for the searched data.

Specifically, the management server 30, which has received the first event information related to the processing command for the searched data from the first terminal device 10, can receive the second event information related to the execution command for the corresponding data from the second terminal device 20. As described above, if both the first event information related to the processing command for the searched data and the second event information related to the execution command for the searched data are received, the management server 30 transmits the communication performance command that includes the identification information included in the second event information received from the second terminal device 20 to the first terminal device 10. Further, the management server 30 transmits the communication performance command that includes the identification information included in the second event information received from the first terminal device 10 to the second terminal device 20.

As described above, if the communication performance command that includes the identification information of the second terminal device 20, that is, the address information, is received from the management server 30, the controller 250 searches for the data to be transmitted to the second terminal device 20 based on the first path information stored in storage unit 230. Thereafter, the controller 250 transmits the searched data to the second terminal device 20 based on the address information included in the received communication performance command. As described above, the first terminal device 10 according to the present disclosure can transmit the searched data to the second terminal device 20 that uses the different protocol.

Above, the operation of transmitting the data from the first terminal device 10 in which the virtual environment is constructed to the second terminal device 20 that uses the different protocol has been described in detail. Hereinafter, the operation of receiving the data from the first terminal device 10 that uses the different protocol, which is performed by the second terminal device 20 in which the virtual environment is constructed according to the present disclosure, will be described in detail.

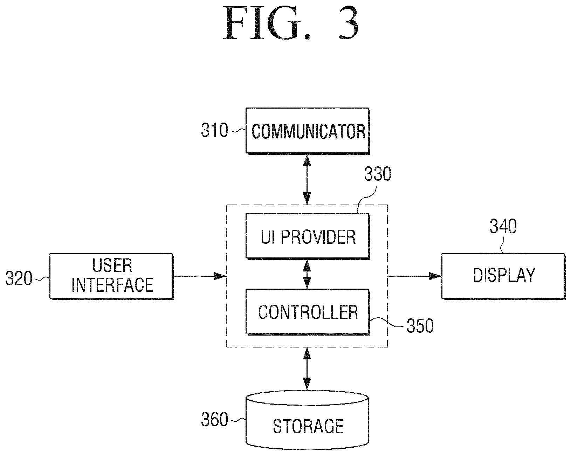

FIG. 3 is a block diagram of a terminal device, in which a virtual environment is constructed, receiving data of the other terminal device according to an embodiment of the present disclosure.

As illustrated in FIG. 3, the terminal device in which the virtual environment is constructed may be the second terminal device 20 as described above, and may be the target terminal device that receives the data provided from the other terminal device in which the virtual environment is established, that is, the first terminal device 10. Here, the virtual environment is an execution environment that is generated based on the resources stored in the external server. Accordingly, in the first terminal device 10 and the second terminal device 20, the virtual Windows environments may be constructed based on the resources stored in the external server. However, the present disclosure is not limited thereto. The second terminal device 20 may be a terminal device in which the virtual environment is constructed, and the first terminal device 10 may be a terminal device in which the actual Windows environment is established.

As described above, the second terminal device 200, in which the virtual environment is constructed, includes a communicator 310, a user interface 320, a UI provider 330, a display 340, and a controller 350.

The communicator 310 performs communication with the management server 30 and the other terminal device, that is, the first terminal device 10. This communicator 310 may be implemented by a communication module, such as a near field communication module (not illustrated) and a wireless communication module (not illustrated). The communicator 310 implemented by the wireless communication module can be connected to an external network according to a wireless communication protocol and perform communication with the management server 30 and the first terminal device 10. In particular, the communicator 310 may be implemented by a wireless communication module, and perform communication with the first terminal device 10 in a P2P (Peer to Peer) method. However, the present disclosure is not limited thereto. The communicator 310 may perform communication with the first terminal device 10 through the external server according to the network topology type, or perform communication with the first terminal device 10 using a file transfer protocol, such as HTTP (Hyper Text Transfer Protocol) and FTP (File Transfer Protocol), for example, and the network position.

On the other hand, the management server 30 that performs communication through the communicator 310 is a server that performs a communication performance command for transmitting/receiving the data by performing the communication between the first terminal device 10 and the second terminal device 20. The first terminal device 10 that performs the communication through the communicator 310 is a terminal device in which the virtual environment or actual Windows environment is constructed and which transmits/receives the data with the second terminal device 20.

The user interface 320 receives the data search command, and the UI provider 330 receives the first event information of the first terminal device 10 from the management server 30 according to the data search command received through the user interface 320. Thereafter, the UI provider 330 provides the UI for executing the data stored in the first terminal device 10 based on the received first event information. Accordingly, the display 340 may display the UI for executing the data provided through the UI provider 330 on the screen. If the execution command is received through the UI displayed on the screen, the controller 350 transmits the second event information related to the received execution command to the management server 30.

Specifically, the controller 350 activates the Windows explorer according to the user command input through the user interface 320. Accordingly, the display 340 displays the activated Windows explorer, and thus the user can request the search command for specific data through the Windows explorer window being displayed on the screen. If the data search command according to such a request is received through the user interface 320, the controller 350 generates and transmits the event occurrence message that notifies of the reception of the data search command to the management server 30. However, the present disclosure is not limited thereto. If the Windows explorer is activated according to the user command input through the user interface 320, the controller 350 may transmit the event occurrence message that notifies of the activation of the Windows explorer to the management server 30.

The management server 30, which has received the event occurrence message, transmits the first event information that is stored in relation to the data processing command of the first terminal device 10 to the second terminal device 20. If the first event information of the first terminal device 10 is received from the management server 30 through the communicator 310, the UI provider 330 provides the UI for executing the data stored in the first terminal device 10 based on the received first event information according to the control command of the controller 350. Here, the first event information may be event information to perform one of cut, copy, and dray for the data to be provided by the first terminal device 10. According to such first event information, the UI controller 330 may provided the UI for executing the data stored in the first terminal device 10. If the execution command for the corresponding UI is received from the user through the user interface 320 when the UI is displayed on the screen, the controller 350 transmits the second event information related to the received execution command to the management server 30. Here, the execution command may be one of paste for storing the data stored in the first terminal device 10 in a specific position and drop. Further, the second event information includes the event information for performing one execution of paste and drop for the stored data in the terminal device 10, that is, address information.

On the other hand, the second terminal device 20 according to the present disclosure may further include a storage unit 360 for storing the second path information to execute the data stored in the first terminal device 10. Specifically, if the execution command for the UI is received, the controller 350 generates the second path information for executing the data stored in the first terminal device 10 in the specific position, and controls the storage unit 360 to store the generated second path information. Here, the second path information includes local directory information for storing the data stored in the first terminal device 10 in the specific position. If the execution command for paste is received, the controller 350 generates the second path information including the local directory information related to the specific position to perform paste for the data stored in the first terminal device 10 based on the received execution command and stores the generated second path information in the storage unit 360.

That is, if the execution command for the UI is received, the controller 350 transmits the second event information related to the received execution command to the management server 30, and at the same time, generates the second path information for executing the data stored in the first terminal device 10 to store the generated second path information in the storage unit 360.

Thereafter, if the communication performance command that includes the identification information of the first terminal device 10, that is, the address information, is received from the management server 30, the controller 350 receives the data from the first terminal device 10 by performing communication with the first terminal device 10 according to the identification information included in the received communication performance command, that is, the address information. Here, the communication performance command received from the management server 30 is a command that is generated based on the first event information related to the processing command for the searched data in the first terminal device 10 and the second event information related to the execution command for the corresponding data in the second terminal device 20.

Specifically, the management server 30, which has received the first event information related to the processing command for the searched data from the first terminal device 10, can receive the second event information related to the execution command for the corresponding data from the second terminal device 20. As described above, if both the first event information and the second event information are received from the first terminal device 10 and the second terminal device 20, the management server 30 transmits the communication performance command that includes the identification information included in the second event information received from the second terminal device 20 to the first terminal device 10. Further, the management server 30 transmits the communication performance command that includes the identification information included in the first event information received from the first terminal device 10 to the second terminal device 20.

As described above, if the communication performance command that includes the identification information of the first terminal device 10, that is, the address information, is received from the management server 30, the controller 350 performs communication with the first terminal device 10 based on the address information included in the received communication performance command. Thereafter, if the data is received from the first terminal device 10 through the communicator 310, the controller 250 may store the received data in the specific position by performing the execution in the corresponding specific position that corresponds to the second path information stored in the storage unit 360.

Above, the operation of performing data transmission/reception with the virtual or actual terminal device through the respective configurations of the terminal device in which the virtual environment is constructed has been described in detail. Hereinafter, the operation of performing data transmission/reception with the virtual or actual terminal device in the terminal device, in which the virtual environment is constructed, will be described in detail.

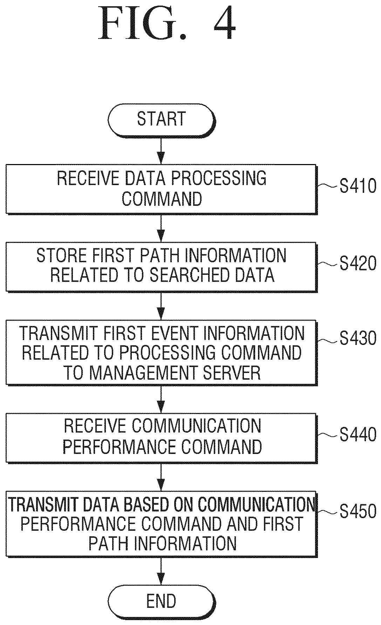

FIG. 4 is a flowchart of a method for providing data from a terminal device, in which a virtual environment is constructed, to a virtual or actual terminal device according to an embodiment of the present disclosure.

As illustrated in FIG. 4, the terminal device, in which the virtual environment is constructed, is the first terminal device 10, which may be a source terminal device that provides the data to the other terminal device, in which the virtual environment is constructed, that is, the second terminal device 20. Here, the virtual environment is an execution environment that is generated based on the resources stored in the external server. Accordingly, the virtual Windows environment can be constructed in the first terminal device 10 and the second terminal device 20 based on the resources stored in the external server. However, the present disclosure is not limited thereto. If the first terminal device 10 is the terminal device, in which the virtual environment is constructed, the second terminal 20 may be the terminal device in which the actual Windows environment is constructed.

As described above, the first terminal device 10, in which the virtual environment is constructed, receives the processing command for the data that is searched for according to the data search command (operation S410). Specifically, the first terminal device 10 may activate the data searcher according to the user request. If the data search command for at least one piece of data among a plurality of pieces of pre-stored data is received from the user when the data searcher is activated, the first terminal device 10 searches for the data that corresponds to the received data search command. Thereafter, if the processing command for the searched data is received, the first terminal device 10 stores the first path information for the position where the searched data is stored (operation S420). Here, the processing command for the searched data may be one of cut, copy, and drag for the corresponding data. The first path information includes the local directory in which the searched data is stored and the data position information. If the processing command for cut is received, the first terminal device 10 generates and stores the first path information that includes the local directory and the data position information to perform cut of the searched data based on the received processing command.

The first terminal device 10, which has stored the first path information, generates the first event information related to the processing command for the searched data and transmits the generated first event information to the management server 30 (operation S430). Here, the first event information includes the event information for performing one processing of cut, copy, and drag for the searched data and the identification information of the first terminal device 10, that is, the address information.

Thereafter, if the communication performance command that includes the identification information of the second terminal device 20, that is, the address information, is received from the management server 30, the first terminal device 10 transmits the searched data to the second terminal device 20 based on the address information included in the received communication performance command and the pre-stored first path information. Here, the management server 30 is a server which performs communication between the first terminal device 10 that is the source terminal device and the second terminal device 20 that is the target terminal device, and transmits the communication performance command for transmitting/receiving the data to the first and second terminal devices 10 and 20. Specifically, the management server 30 receives and stores the first event information related to the processing command for the searched data from the first terminal device 10. Further, the management server 30 may receive the second event information related to the performance command for the searched data in the first terminal device 10 from the second terminal device 20 (operation S440). As described above, if both the first event information and the second event information are received, the management server 30 transmits the communication performance command that includes the identification information included in the second event information received from the second terminal device 20 to the first terminal device 10. Further, the management server 30 transmits the communication performance command that includes the identification information included in the first event information received from the first terminal device 10 to the second terminal device 20 (operation S450).

Accordingly, if the communication performance command is received from the management server 30, the first terminal device 10 searches for the data transmitted to the second terminal device 20 based on the pre-stored first path information. Thereafter, the first terminal device 10 transmits the searched data to the second terminal device 20 by performing communication with the second terminal device 20 based on the identification information included in the communication performance command received from the management server 30, that is, the address information. According to embodiments, the first terminal device 10 may transmit the searched data to the second terminal device 20 by performing communication with the second terminal device 20 in a P2P method. However, the present disclosure is not limited thereto. The first terminal device 10 may transmit the searched data to the second terminal device 20 through the external server according to the network topology type, or may transmit the searched data to the second terminal device 20 using the file transfer protocol, such as HTTP and FTP, and the network position. As described above, the first terminal device 10 in which the virtual environment is constructed according to the present disclosure can transmit the searched data to the second terminal device 20 that is the virtual or actual terminal device using the different protocol.

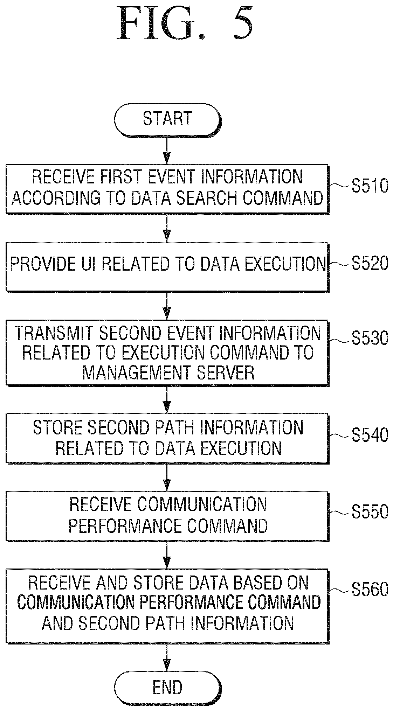

FIG. 5 is a flowchart of a method for receiving data of a virtual or actual terminal device through a terminal device in which a virtual environment is constructed according to an embodiment of the present disclosure.

As illustrated in FIG. 5, the terminal device in which the virtual environment is constructed may be the second terminal device 20 as described above, and may be the target terminal device that receives the data provided from the other terminal device in which the virtual environment is established, that is, the first terminal device 10. In this case, the first terminal device 10 that provides the data may be the source terminal device. Further, the virtual environment is an execution environment that is generated based on the resources stored in the external server. Accordingly, in the first terminal device 10 and the second terminal device 20, the virtual Windows environments may be constructed based on the resources stored in the external server. However, the present disclosure is not limited thereto. The second terminal device 20 may be a terminal device in which the virtual environment is constructed, and the first terminal device 10 may be a terminal device in which the actual Windows environment is established.

If the data search command is received from the user, the second terminal 200, in which the virtual environment is constructed, receives the first event information of the first terminal device 10 from the management server 30 according to the received data search command (operation S510). Specifically, the second terminal device 20 may activate the data searcher according to the user request. If the data search command is received from the user when the data searcher is activated, the second terminal device 20 generates and transmits an event occurrence message that notifies of the reception of the data search command to the management server 30. However, the present disclosure is not limited thereto. If the Windows explorer is activated according to the user command, the second terminal device 20 may transmit the event occurrence message that notifies of the activation of the Windows explorer to the management server 30.

The management server 30, which has received the event occurrence message, transmits the first event information that is stored in relation to the processing command for the searched data in the first terminal device 10 to the second terminal device 20. Here, the first event information may be the event information for performing one of cut, copy, and drag for the data provided from the first terminal device 10. If the first event information is received from the management server 30, the second terminal device 20 provides the UI for executing the data stored in the first terminal device 10 based on the received first event information (operation S520).

If the execution command for the corresponding UI is received from the user when the UI for data execution is displayed on the screen, the second terminal device 20 generates and transmits the second path information related to the received execution command to the management server 30 (operation S530). Here, the execution command may be one of paste for storing the data stored in the first terminal device 10 in a specific position and drop. Further, the second event information includes the event information for performing one of paste and drop for the data stored in the first terminal device 10 and the identification information of the second terminal device 20, that is, the address information.

The second terminal device 20, which transmits the second event information to the management server 30 according to the received execution command, generates and stores the second path information for executing (or storing) the data stored in the first terminal device 10 in the specific position (operation S540). Here, the second path information includes the local directory information for storing the data stored in the first terminal device 10 in the specific position. If the execution command for paste is received, the second terminal device 20 may generate the second path information including the local directory information related to the specific position to perform paste for the data stored in the first terminal device 10 based on the received execution command for paste and store the generated second path information.

Thereafter, if the communication performance command that includes the identification information of the first terminal device 10, that is, the address information, is received from the management server 30, the second terminal device 20 receives the data from the first terminal device 10 by performing communication with the first terminal device 10 according to the address information included in the received communication performance command (operation S550). According to the embodiments, the second terminal device 20 may receive the data from the first terminal device 10 by performing communication with the first terminal device 10 in a P2P method. However, the present disclosure is not limited thereto. The second terminal device 20 may receive the data from the first terminal device 10 through the external server according to the network topology type, or may receive the data from the first terminal device 10 using the file transfer protocol, such as HTTP and FTP, for example, and the network position.

On the other hand, as described above, the communication performance command received from the management server 30 is a command that is generated based on the first event information related to the processing command for the searched data in the first terminal device 10 and the second event information related to the execution command for the corresponding data in the second terminal device 20.

Specifically, the above-described management server 30 is a server which transmits the communication performance command for transmitting/receiving the data to/from the first and second terminal devices 10 and 20 by performing communication between the first terminal device 10 that is the source terminal device and the second terminal device 20 that is the target terminal device. That is, the management server 30 receives and stores the first event information related to the performance command for the searched data from the first terminal device 10. Further, the management server 30 may receive the second event information related to the performance command for the searched data in the first terminal device 10 from the second terminal device 20 (operation S560). As described above, if both the first event information and the second event information are received, the management server transmits the communication performance command that includes the identification information, that is, address information, included in the second event information received from the second terminal device 20, to the first terminal device 10. Further, the management server 30 transmits the communication performance command that includes the identification information included in the first event information received from the first terminal device 10 to the second terminal device 20.

Accordingly, the second terminal device 20, which has received the communication performance command including the address information of the first terminal device 10, performs communication with the first terminal device 10, which has received the communication performance command including the address information of the second terminal device 20. Thereafter, if the searched data is received from the first terminal device 10, the second terminal device 20 may store the data received in the corresponding specific position by performing the execution in the specific position that corresponds to the pre-stored second path information.

As described above, the second terminal device 20, in which the virtual environment is constructed, according to the present disclosure can store the data received from the first terminal device 10 that is the virtual or actual terminal device using the different protocol in the specific position.

Above, the preferred embodiments of the present disclosure have been described.

The above-described embodiments may be recorded in computer-readable media including program instructions to implement various operations embodied by a computer. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The computer-readable media may also be a distributed network, so that the program instructions are stored and executed in a distributed fashion. The program instructions may be executed by one or more processors. The computer-readable media may also be embodied in at least one application specific integrated circuit (ASIC) or Field Programmable Gate Array (FPGA), which executes (processes like a processor) program instructions. Examples of program instructions include both machine code, such as produced by a compiler, and files containing higher level code that may be executed by the computer using an interpreter. The above-described devices may be configured to act as one or more software modules in order to perform the operations of the above-described embodiments, or vice versa.
While the present disclosure has been shown and described with reference to certain embodiments thereof, it will be understood by those skilled in the art that various changes in form and detail may be made therein without departing from the scope of the present disclosure, as defined by the appended claims.

## Claims

1. A data communication method of a first terminal device (10) in which a virtual operating system environment is constructed, comprising:
receiving, by the first terminal device, a processing command for data searched for according to a data search command, the processing command being one of data cut, copy, and drag for the searched data;
storing, by the first terminal device, first path information on a local directory and data position of the searched data and transmitting first event information related to the processing command to a management server (30);
receiving, by the first terminal device, a communication performance command including identification information of a second terminal device (20) from the management server; and
transmitting, by the first terminal device, if said communication performance command is received, the data to the second terminal device based on the identification information and the first path information,
wherein the communication performance command is generated by the management server based on the first event information and second event information related to an execution command for the data received from the second terminal device, the execution command being one of data paste and drop for received data in the second terminal device.

2. The data communication method as claimed in claim 1, wherein the first event information comprises information on processing command for one of data cut, copy, and drag of the data searched and identification information of the first terminal device (10), and
the second event information comprises execution information of one of data paste and drop and identification information of the second terminal device (20).

3. The data communication method as claimed in claim 1 or 2, wherein the first terminal device (10) comprises a source terminal device that is arranged to provide the data, and
the second terminal device (20) comprises a target terminal device that is arranged to receive the data from the source terminal device.

4. The data communication method as claimed in claim 1 to 3, wherein the virtual operating system environment comprises an execution environment that is generated based on resources stored in an external server.

5. The data communication method as claimed in claim 1 to 4, wherein the first terminal device (10) is arranged to perform communication with the second terminal device using a Peer to Peer (P2P) method.

6. A first terminal device (10) in which a virtual environment operating system is constructed, comprising:
a communicator (210, 310) arranged to perform communication with a management server (30) and a second terminal device (20);
a user interface (220, 320) arranged to receive a processing command for data searched for according to a data search command, the processing command being one of data cut, copy, and drag for the searched data;
a storage unit (230, 360) arranged to store first path information on a local directory and data position of the searched data; and
a controller (250, 350) arranged to transmit first event information related to the processing command to the management server, and if a communication performance command including identification information of the second terminal device is received from the management server, to transmit the data to the second terminal device based on the identification information and the first path information,
wherein the communication performance command is generated by the management server based on the first event information and second event information related to an execution command for the data received from the second terminal device, the execution command being one of data paste and drop for a received data in the second terminal device.

7. The first terminal device (10) as claimed in claim 6, wherein the first event information comprises information on processing command for one of data cut, copy, and drag of the searched data and identification information of the first terminal device (10), and
the second event information comprises execution information of one of one of data paste and drop and identification information of the second terminal device (20).

8. The first terminal device (10) as claimed in claim 6 or 7, wherein the first terminal device (10) comprises a source terminal device that is arranged to provide the data, and
the second terminal device (20) comprises a target terminal device arranged to receive the data from the source terminal device.

9. The first terminal device (10) as claimed in claim 6 to 8, wherein the virtual operating system environment comprises an execution environment that is generated based on resources stored in an external

10. The first terminal device (10) as claimed in claim 6 to 9, wherein the communicator (210, 310) is arranged to perform communication with the second terminal device (20) using a Peer to Peer (P2P) method.

## Patentansprüche

1. Datenkommunikationsverfahren einer ersten Endgerätvorrichtung (10), in der eine virtuelle Betriebssystemumgebung aufgebaut ist, umfassend:
Empfangen, durch die erste Endgerätvorrichtung, eines Verarbeitungsbefehls für gemäß einem Datensuchbefehl gesuchte Daten, wobei es sich bei dem Verarbeitungsbefehl um eines von Ausschneiden, Kopieren und Ziehen von Daten für die gesuchten Daten handelt;
Speichern, durch die erste Endgerätvorrichtung, erster Pfadinformationen zu einem lokalen Verzeichnis und einer Datenposition der gesuchten Daten und
Übertragen mit dem Verarbeitungsbefehl zusammenhängender erster Ereignisinformation an einen Verwaltungsserver (30);
Empfangen, durch die erste Endgerätvorrichtung, eines Kommunikationsleistungsbefehls, der Identifikationsinformationen einer zweiten Endgerätvorrichtung (20) umfasst, von dem Verwaltungsserver her; und
Übertragen, durch die erste Endgerätvorrichtung, falls der Kommunikationsleistungsbefehl empfangen wird, der Daten an die zweite Endgerätvorrichtung basierend auf den Identifikationsinformationen und den ersten Pfadinformationen,
wobei der Kommunikationsleistungsbefehl von dem Verwaltungsserver basierend auf den mit einem Ausführungsbefehl für die von der zweiten Endgerätvorrichtung her empfangenen Daten zusammenhängenden ersten Ereignisinformationen und zweiten Ereignisinformationen erzeugt wird, wobei es sich bei dem Ausführungsbefehl um eines von Einfügen und Ablegen von Daten für empfangene Daten in der zweiten Endgerätvorrichtung handelt.

2. Datenkommunikationsverfahren nach Anspruch 1, wobei
die ersten Ereignisinformationen Informationen zu dem Verarbeitungsbefehl für eines von Ausschneiden, Kopieren und Ziehen von Daten der gesuchten Daten und Identifikationsinformationen der ersten Endgerätvorrichtung (10) umfassen, und
die zweiten Ereignisinformationen Ausführungsinformationen von einem von Einfügen und Ablegen von Daten und Identifikationsinformationen der zweiten Endgerätvorrichtung (20) umfassen.

3. Datenkommunikationsverfahren nach Anspruch 1 oder 2, wobei die erste Endgerätvorrichtung (10) eine Quellenendgerätvorrichtung umfasst, die dazu angeordnet ist, die Daten bereitzustellen, und
die zweite Endgerätvorrichtung (20) eine Zielendgerätvorrichtung umfasst, die dazu angeordnet ist, die Daten von der Quellenendgerätvorrichtung her zu empfangen.

4. Datenkommunikationsverfahren nach Anspruch 1 bis 3, wobei die virtuelle Betriebssystemumgebung eine Ausführungsumgebung umfasst, die basierend auf in einem externen Server gespeicherten Ressourcen erzeugt wird.

5. Datenkommunikationsverfahren nach Anspruch 1 bis 4, wobei die erste Endgerätvorrichtung (10) dazu angeordnet ist, Kommunikation mit der zweiten Endgerätvorrichtung unter Verwendung eines Peer-to-Peer (P2P)-Verfahrens auszuführen.

6. Erste Endgerätvorrichtung (10), in der eine virtuelle Betriebssystemumgebung aufgebaut ist, umfassend:
einen Kommunikator (210, 310), der dazu angeordnet ist, Kommunikation mit einem Verwaltungsserver (30) und einer zweiten Endgerätvorrichtung (20) auszuführen;
eine Benutzerschnittstelle (220, 320), die dazu angeordnet ist, einen Verarbeitungsbefehl für gemäß einem Datensuchbefehl gesuchte Daten zu empfangen, wobei es sich bei dem Verarbeitungsbefehl um eines von Ausschneiden, Kopieren und Ziehen von Daten für die gesuchten Daten handelt;
eine Speichereinheit (230, 360), die dazu angeordnet ist, erste Pfadinformationen zu einem lokalen Verzeichnis und der Datenposition der gesuchten Daten zu speichern; und
einen Kontroller (250, 350), der dazu angeordnet ist, mit dem Verarbeitungsbefehl zusammenhängende erste Ereignisinformationen an den Verwaltungsserver zu übertragen, und, falls ein Identifikationsinformationen der zweiten Endgerätvorrichtung umfassender Kommunikationsleistungsbefehl von dem Verwaltungsserver empfangen wird, die Daten basierend auf den Identifikationsinformationen und den ersten Pfadinformationen an die zweite Endgerätvorrichtung zu übertragen,
wobei der Kommunikationsleistungsbefehl von dem Verwaltungsserver basierend auf den mit einem Ausführungsbefehl für die von der zweiten Endgerätvorrichtung her empfangenen Daten zusammenhängenden ersten Ereignisinformationen und zweiten Ereignisinformationen erzeugt wird, wobei es sich bei dem Ausführungsbefehl um eines von Einfügen und Ablegen von Daten für empfangene Daten in der zweiten Endgerätvorrichtung handelt.

7. Erste Endgerätvorrichtung (10) nach Anspruch 6, wobei die ersten Ereignisinformationen Informationen zu dem Verarbeitungsbefehl für eines von Ausschneiden, Kopieren und Ziehen von Daten der gesuchten Daten und Identifikationsinformationen der ersten Endgerätvorrichtung (10) umfassen, und
die zweiten Ereignisinformationen Ausführungsinformationen von einem von Daten Einfügen und Ablegen und Identifikationsinformationen der zweiten Endgerätvorrichtung (20) umfassen.

8. Erste Endgerätvorrichtung (10) nach Anspruch 6 oder 7, wobei die erste Endgerätvorrichtung (10) eine Quellenendgerätvorrichtung her umfasst, die dazu angeordnet ist, die Daten bereitzustellen, und
die zweite Endgerätvorrichtung (20) eine Zielendgerätvorrichtung umfasst, die dazu angeordnet ist, die Daten von der Quellenendgerätvorrichtung zu empfangen.

9. Erste Endgerätvorrichtung (10) nach Anspruch 6 bis 8, wobei die virtuelle Betriebssystemumgebung eine Ausführungsumgebung umfasst, die basierend auf in einem externen Server gespeicherten Ressourcen erzeugt wird.

10. Erste Endgerätvorrichtung (10) nach Anspruch 6 bis 9, wobei der Kommunikator (210, 310) dazu angeordnet ist, Kommunikation mit der zweiten Endgerätvorrichtung (20) unter Verwendung eines Peer-to-Peer (P2P)-Verfahrens auszuführen.

## Revendications

1. Procédé de communication de données d'un premier dispositif terminal (10) dans lequel un environnement de système d'exploitation virtuel est construit, comprenant :
la réception, par le premier dispositif terminal, d'une commande de traitement de données recherchées conformément à une commande de recherche de données, la commande de traitement portant sur l'un d'une coupe, d'une copie et d'un glissement de données des données recherchées ;
la mémorisation, par le premier dispositif terminal, de premières informations de chemin sur un répertoire local et de la position des données des données recherchées et
la transmission de premières informations d'événement relatives à la commande de traitement à un serveur de gestion (30) ;
la réception, par le premier dispositif terminal, d'une commande d'exécution de communication comportant des informations d'identification d'un second dispositif terminal (20) depuis le serveur de gestion ; et
la transmission, par le premier dispositif terminal, si ladite commande d'exécution de communication est reçue, des données au second dispositif terminal en fonction des informations d'identification et des premières informations de chemin,
dans lequel la commande d'exécution de communication est générée par le serveur de gestion en fonction des premières informations d'événement et de secondes informations d'événement relatives à une commande d'exécution pour les données reçues depuis le second dispositif terminal, la commande d'exécution portant sur l'un d'un collage et d'un dépôt de données des données reçues dans le second dispositif terminal.

2. Procédé de communication de données selon la revendication 1, dans lequel les premières informations d'événement comprennent des informations sur la commande de traitement de l'un de la coupe, la copie et du glissement de données sur les données recherchées et des informations d'identification du premier dispositif terminal (10), et
les secondes informations d'événement comprennent des informations d'exécution de l'un d'un collage et d'un dépôt de données et d'informations d'identification du second dispositif terminal (20).

3. Procédé de communication de données selon la revendication 1 ou 2, dans lequel le premier dispositif terminal (10) comprend un dispositif terminal source qui est agencé pour fournir les données, et
le second dispositif terminal (20) comprend un dispositif terminal cible qui est agencé pour recevoir les données provenant du dispositif terminal source.

4. Procédé de communication de données selon les revendications 1 à 3, dans lequel l'environnement de système d'exploitation virtuel comprend un environnement d'exécution qui est généré en fonction de ressources mémorisées dans un serveur externe.

5. Procédé de communication de données selon les revendications 1 à 4, dans lequel le premier dispositif terminal (10) est agencé pour exécuter une communication avec le second dispositif terminal selon un procédé poste à poste (P2P).

6. Premier dispositif terminal (10) dans lequel est construit un système d'exploitation à environnement virtuel, comprenant :
un communicateur (210, 310) agencé pour exécuter une communication avec un serveur de gestion (30) et un second dispositif terminal (20) ;
une interface utilisateur (220, 320) agencée pour recevoir une commande de traitement de données recherchées conformément à une commande de recherche de données, la commande de traitement portant sur l'un d'une coupe, d'une copie et d'un glissement de données des données recherchées ;
une unité de mémorisation (230, 360) agencée pour mémoriser des premières informations de chemin sur un répertoire local et la position des données des données recherchées et
un contrôleur (250, 350) agencé pour transmettre des premières informations d'événement relatives à la commande de traitement au serveur de gestion, et si une commande d'exécution de communication comportant des informations d'identification du second dispositif terminal est reçue du serveur de gestion, transmettre les données au second dispositif terminal en fonction des informations d'identification et des premières informations de chemin,
dans lequel la commande d'exécution de communication est générée par le serveur de gestion en fonction des premières informations d'événement et de secondes informations d'événement relatives à une commande d'exécution pour les données reçues depuis le second dispositif terminal, la commande d'exécution portant sur l'un d'un collage et d'un dépôt de données des données reçues dans le second dispositif terminal.

7. Premier dispositif terminal (10) selon la revendication 6, dans lequel les premières informations d'événement comprennent des informations sur la commande de traitement portant sur l'un de la coupe, de la copie et du glissement de données des données recherchées et des informations d'identification du premier dispositif terminal (10), et
les secondes informations d'événement comprennent des informations d'exécution de l'un d'un collage et d'un dépôt de données et d'informations d'identification du second dispositif terminal (20).

8. Premier dispositif terminal (10) selon la revendication 6 ou 7, dans lequel le premier dispositif terminal (10) comprend un dispositif terminal source qui est agencé pour fournir les données, et
le second dispositif terminal (20) comprend un dispositif terminal cible qui est agencé pour recevoir les données provenant du dispositif terminal source.

9. Premier dispositif terminal (10) selon les revendications 6 à 8, dans lequel l'environnement de système d'exploitation virtuel comprend un environnement d'exécution qui est généré en fonction de ressources mémorisées dans un serveur externe.

10. Premier dispositif terminal (10) selon les revendications 6 à 9, dans lequel le communicateur (210, 310) est agencé pour exécuter une communication avec le second dispositif terminal (20) selon un procédé poste à poste (P2P).
